# EUROPÄISCHE PATENTSCHRIFT

(11) **EP 3 649 013 B1**
(45) Veröffentlichungstag und Bekanntmachung des Hinweises auf die Patenterteilung: **14.12.2022**
(21) Anmeldenummer: 18723664.1
(22) Anmeldetag: 24.04.2018
(51) Int. Cl.: B60Q 1/12, F21S 41/675

(54) **VERFAHREN ZUR ERZEUGUNG EINER VARIABLEN FERNLICHT-LICHTVERTEILUNG UND VORRICHTUNG**
METHOD FOR GENERATING A VARIABLE HIGH BEAM LIGHT DISTRIBUTION AND DEVICE
PROCÉDÉ DE PRODUCTION D'UNE DISTRIBUTION DE LUMIÈRE VARIABLE DE FEUX DE ROUTE ET DISPOSITIF

(30) Priorität: 03.07.2017 AT 505452017
(43) Veröffentlichungstag der Anmeldung: 13.05.2020
(73) Patentinhaber: ZKW Group GmbH, 3250 Wieselburg (AT)
(72) Erfinder: REINPRECHT, Markus, 3384 Pielachhäuser (AT); REISINGER, Bettina, 3300 Amstetten (AT); MITTERLEHNER, Thomas, 3240 Mank (AT)
(74) Vertreter: Patentanwaltskanzlei Matschnig & Forsthuber OG
(86) Internationale Anmeldenummer: PCT/AT2018/060076
(87) Internationale Veröffentlichungsnummer: WO 2019/006481

(56) Entgegenhaltungen:
- EP-A1- 3 115 256
- EP-A2- 2 541 130
- EP-A2- 2 548 768
- WO-A1-2016/021154
- WO-A1-2017/106894
- DE-A1-102014 214 522
- US-A1- 2009 046 474
- US-A1- 2015 175 053

## Beschreibung

Die Erfindung betrifft ein Verfahren zur Erzeugung einer variablen Fernlicht-Lichtverteilung durch zumindest einen Scheinwerfer eines Fahrzeugs, welcher ein Leuchtmittel, eine Ablenkvorrichtung und eine Projektionsoptik umfasst, und das Leuchtmittel eingerichtet ist, Licht in Richtung der Ablenkvorrichtung zu emittieren, die das Licht zumindest teilweise in Richtung der Projektionsoptik ablenkt und vor dem Fahrzeug ein Lichtbild erzeugt, wobei die Ablenkvorrichtung von einer Steuervorrichtung mittels eines Ablenk-Parametersatzes konfigurierbar ist.

Ferner betrifft die Erfindung ein Kraftfahrzeug-Scheinwerfersystem, umfassend zumindest einen Scheinwerfer, der eingerichtet ist, eine variable Fernlicht-Lichtverteilung zu erzeugen, und zumindest eine Steuervorrichtung.

Außerdem betrifft die Erfindung ein Kraftfahrzeug mit einem Kraftfahrzeug-Scheinwerfersystem der vorher genannten Art.

Bei der Entwicklung der gegenwärtigen Scheinwerfersysteme steht immer mehr der Wunsch im Vordergrund, ein möglichst hochauflösendes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im hier verwendeten Sinn einer Projektion auf eine vertikale Fläche entsprechend der einschlägigen Normen, die sich auf die KFZ-Beleuchtungstechnik beziehen. Oft spricht man an Stelle von "Fahrbahn" auch von "Verkehrsraum".

Entsprechend dem genannten Bedürfnis sind unterschiedliche Scheinwerfersysteme entwickelt worden, wie insbesondere mit sehr schnell abgelenkten, modulierten Laserstrahlen arbeitende Scheinwerfer, wobei lichttechnischer Ausgangspunkt zumindest eine Laserlichtquelle ist, die einen Laserstrahl abgibt, und welcher eine Laseransteuerung zugeordnet ist, die zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" ist dabei zu verstehen, dass die Intensität der Laserlichtquelle geändert werden kann, sei es kontinuierlich oder im Sinne eines Ein- und Ausschaltens gepulst. Wesentlich ist, dass die Lichtleistung analog dynamisch geändert werden kann, je nachdem, an welcher Winkelposition ein den Laserstrahl ablenkender Spiegel steht. Zusätzlich gibt es noch die Möglichkeit des Ein- und Ausschaltens für eine gewisse Zeit, um definierte Stellen nicht zu beleuchten oder auszublenden. Die Ansteuerung der Laserlichtquellen und der zur Strahlablenkung dienenden Mikrospiegel erfolgt über eine Recheneinheit. Ein Beispiel eines dynamischen Ansteuerungskonzepts zur Erzeugung eines Bildes durch einen sehr schnell abgelenkten Laserstrahl ist etwa in dem Dokument AT 514633 der Anmelderin beschrieben. Andere Verfahren sind aus den EP 2 541 130 A2 und US 2015/175053 A1 bekannt.

Es ist Aufgabe der Erfindung, den Stand der Technik zu verbessern und ein Verfahren und eine Vorrichtung zur Erzeugung einer variablen Fernlicht-Lichtverteilung zu schaffen und dadurch ein lange bestehendes Bedürfnis nach einer optimalen Beleuchtung durch einen Fahrzeugscheinwerfer in speziellen Verkehrssituationen zu erfüllen. Außerdem sollen das Verfahren und die Vorrichtung einfach und kostengünstig realisierbar sein.

Die Aufgabe wird durch ein Verfahren gemäß Anspruch 1 gelöst.

Dadurch kann eine Kurvenlichtfunktion für ein Fernlicht geschaffen werden, wobei ein weit vor dem Fahrzeug gelegener Straßenverlauf dynamisch während der Fahrt erkannt und ausleuchtet wird. Diese Kurvenlichtfunktion ist insbesondere für ein Autobahn-Kurvenlicht vorgesehen, welches einer Kurvenlichtfunktion insbesondere für hohe Fahrzeuggeschwindigkeiten entspricht. Außerdem weisen Autobahnen und Schnellstraßen häufig im Vergleich zu höherrangigen Straßen, die keine Autobahnen oder Schnellstraßen sind, geringere Kurvenradien auf. Dadurch kann die Erfassung des Straßenverlaufs sehr verlässlich erfolgen und für den Fahrer des Fahrzeugs eine deutliche Verbesserung der Ausleuchtung der Fahrbahn erreicht werden. Durch das erfindungsgemäße Verfahren und die Vorrichtung kann somit die Sicht für den Fahrer des Fahrzeugs verbessert werden. Unter "Skalieren einer Lichtverteilung" ist in diesem Zusammenhang die Anpassung der Größe der Projektion eines auf die Fahrbahn projizierten Lichtbilds zu verstehen. Mit anderen Worten wird das Lichtbild, deren Intensitätsverteilung durch die Lichtverteilung beschrieben werden kann, in der Breite und in der Höhe des Lichtbilds angepasst.

Unter der Ablenk-Mitte der Ablenkvorrichtung kann in diesem Zusammenhang die Lage des lokalen Maximums in einer Helligkeitsverteilung, die durch die Ablenkung eines Reflektors in Form eines sich ändernden Ablenk-Winkels der Ablenkvorrichtung erzeugt werden kann, verstanden werden. Das lokale Maximum kann auch als geometrischer Schwerpunkt oder Flächenschwerpunkt einer Fläche, die durch eine Isolux-Kurve in einer graphischen Darstellung einer Lichtverteilung gebildet ist, festgelegt werden. Die Ablenk-Mitte wird auch als sogenannter "Lichtschwerpunkt" bezeichnet.

Mit dem Ablenk-Winkel wird der jeweilige Winkel der Ablenkvorrichtung bezeichnet, der sich nach Anlegen eines entsprechenden elektrischen Ansteuersignals an die Ablenkvorrichtung einstellt und einen einfallenden Lichtstrahl in Richtung der Projektionsoptik des Fahrzeugs reflektiert. Dabei ist dem Fachmann klar, dass die Intensität durch das Leuchtmittel auch entsprechend angesteuert werden muss, um tatsächlich einen entsprechenden Lichtstrahl für einen jeweiligen Ablenk-Winkel zu erzielen.

Unter der Ablenk-Breite der Ablenkvorrichtung wird in diesem Zusammenhang der Öffnungswinkel eines Lichtstrahls, der durch die Ablenkung des Reflektors der Ablenkvorrichtung erzeugt werden kann, verstanden, welcher zwischen zwei Grenzwerten der Auslenkung entsteht. Die zwei Grenzwerte, ein unterer und ein oberer Grenzwert, können beispielsweise durch jene Intensitäten des Lichtstrahls definiert sein, deren Werte beispielsweise der halben maximalen Intensität von jenem in der Ablenk-Mitte entsprechen.

Mit der Ablenk-Geschwindigkeit der Ablenkvorrichtung wird in diesem Zusammenhang die Drehgeschwindigkeit des Reflektors der Ablenkvorrichtung bezeichnet. Die Ablenk-Geschwindigkeit kann je nach Ablenk-Winkel variieren.

Es ist dabei günstig, wenn das Verlaufs-Sensormittel eingerichtet ist, den Straßenverlauf in einem Abstand von zumindest 50 m, bevorzugt zumindest 150 m, besonders bevorzugt zumindest 300 m vor dem Fahrzeug zu erfassen, und welcher vorzugsweise ferner eingerichtet ist, Gegenverkehrs-Daten durch ein Gegenverkehrs-Sensormittel, welches bevorzugt einen optischen Sensor, insbesondere eine Kamera, beinhaltet, welcher optische Sensor mit der Steuervorrichtung verbunden oder von der Steuervorrichtung umfasst ist, zu erfassen, die den, dem Fahrzeug auf einer benachbarten Fahrspur entgegenkommenden Verkehr beschreiben und die Gegenverkehrs-Daten bei der Bestimmung des Straßenverlaufs verwendet werden. Dadurch kann erreicht werden, dass der Straßenverlauf mit einer hohen Erkennungs-Wahrscheinlichkeit durch das Gegenverkehrs-Sensormittel erfasst wird. Gegenverkehrs-Sensormittel werden in bestehenden Systemen bereits dazu eingesetzt, beispielsweise um ein blendfreies Fernlicht anzusteuern, das den Gegenverkehr nicht blendet. Sensordaten aus einem solchen System können im erfindungsgemäßen Verfahren verarbeitet werden.

Es ist vorteilhaft, wenn durch die Steuervorrichtung aus dem erfassten Straßenverlauf Lichtverteilungs-Daten bestimmt werden, welche zumindest teilweise den erfassten Straßenverlauf beschreiben. Dadurch kann erreicht werden, dass eine vordefinierte Lichtverteilung, beispielsweise in Form einer Fernlicht-Lichtverteilung, derart abgeändert beziehungsweise vergrößert wird, dass sie in ihrem Leuchtbereich derart erweitert, dass sowohl eine detektierte Verkehrsfläche, die näher vor dem Fahrzeug gelegen ist, als auch eine detektierte Verkehrsfläche, die weiter entfernt, beispielsweise in einer Kurve des detektierten Straßenverlaufs gelegen ist, ebenfalls ausgeleuchtet ist.

Es ist erfindungsgemäß vorgesehen, dass die Ablenk-Geschwindigkeit in Abhängigkeit von einem Ablenk-Winkel der Ablenkvorrichtung variierbar ist und, vorzugsweise ausgehend von der Ablenk-Mitte, mit zunehmendem Betrag des Ablenk-Winkels größer wird, und vorzugsweise bei Überschreiten eines Grenzwerts für den Betrag des Ablenk-Winkels, wobei der Grenzwert dem Betrag eines unteren Grenzwerts oder einem oberen Grenzwert entspricht, wieder geringer, bevorzugt zu Null wird. Für einen Ablenk-Winkel mit dem Wert Null liegt die Frequenz für die Bewegung des Reflektors bei einer ersten Frequenz. Für einen Ablenk-Winkel, der durch den Halben Wert der Ablenk-Breite, ausgehend von der Ablenk-Mitte definiert ist, entspricht, ist es vorgesehen, dass die Frequenz für die Bewegung des Reflektors bei einer zweiten Frequenz gelegen ist, wobei die zweite Frequenz größer ist als die erste Frequenz. Für Ablenk-Winkel, die über den Wert der halben Ablenk-Breite hinausgehen, ist es vorgesehen, dass die Frequenz für die Bewegung des Reflektors wieder abnimmt und bei weiterem Ansteigen des Ablenk-Winkels sogar zu Null wird. Dadurch kann erreicht werden, dass die Helligkeit der erzeugten Lichtverteilung in den Bereichen, die über die Ablenk-Breite hinausgehen, homogen mit dem Bereich innerhalb der Ablenk-Breite bleibt.

Nach der Erfindung ist es vorgesehen, dass im Fall eines geraden Verlaufs des durch die Steuervorrichtung bestimmten Straßenverlaufs, sowie mit zunehmender Geschwindigkeit, die Ablenk-Breite der Ablenkvorrichtung verkleinert wird. Dadurch kann erreicht werden, dass die durch den Scheinwerfer projizierte Lichtverteilung kleiner ist und im Maximum eine höhere Intensität aufweist, wodurch die Leuchtreichweite des Scheinwerfers vergrößert wird.

Es ist günstig, wenn die vordefinierte Lichtverteilung eine Fernlicht-Lichtverteilung ist, die in der Steuervorrichtung gespeichert ist. Dadurch kann erreicht werden, dass der Scheinwerfer einfach ansteuerbar ist.

Eine erfindungsgemäße Aufgabe wird ferner durch einen Fahrzeugscheinwerfer und ein Kraftfahrzeug mit einem Fahrzeugscheinwerfer gelöst, der eingerichtet ist, das genannte Verfahren auszuführen. Dadurch kann eine Vorrichtung mit einer Kurvenlicht-Lichtfunktion für einen Fahrzeugscheinwerfer mit einer Fernlicht-Lichtverteilung kombiniert.

Es ist günstig, wenn das Leuchtmittel des Scheinwerfers zumindest eine Lichtquelle in Form einer LED, vorzugsweise einer schmalbandig emittierenden LED oder Laser-Diode umfasst, dessen Lichtemission vorzugsweise durch eine Primäroptik gebündelt oder geformt wird. Es ist außerdem günstig, wenn das Kraftfahrzeug-Scheinwerfersystem vorzugsweise ein Konversionsmittel umfasst, das zwischen der Ablenkvorrichtung und der Projektionsoptik im Strahlengang des von der Ablenkvorrichtung abgelenkten Lichts in einer Brennebene der Projektionsoptik gelegen ist, oder das Konversionsmittel von dem Leuchtmittel umfasst ist, und das Konversionsmittel dazu eingerichtet ist, das abgelenkte Licht von einem nicht-sichtbaren Spektralbereich in einen sichtbaren Spektralbereich, beispielsweise in weißes Licht, zu konvertieren. Dadurch kann eine kostengünstige Realisierung eines erfindungsgemäßen Scheinwerfers erreicht werden.

Die zumindest eine Lichtquelle kann somit auch ein Konversionsmittel umfassen, welches direkt auf der zumindest eine Lichtquelle aufgebracht ist und dazu eingerichtet ist, eine erzeugte Lichtemission mit einem Lichtspektrum im nicht-sichtbaren Spektralbereich in einen sichtbaren Spektralbereich, beispielsweise in weises Licht, zu konvertieren.

Dabei ist es vorteilhaft, wenn die Ablenkvorrichtung in eingebautem Zustand eingerichtet ist, eine horizontal orientierte Ablenkung eines einfallenden Lichtstrahls, welcher durch das Leuchtmittel emittiert und auf die Ablenkvorrichtung gerichtet ist, durchzuführen, wobei die Intensität des Leuchtmittels reduziert wird, vorzugsweise auf Null, wenn ein Betrag eines Grenzwerts für den Ablenk-Winkel überschritten wird. Dadurch kann erreicht werden, dass die erzeugte Lichtverteilung an den Grenzen der Ablenk-Breite besonders homogen erscheint.

In einer günstigen Weiterentwicklung der Erfindung ist im Fall einer durch die Steuervorrichtung in einem bestimmten Straßenverlauf detektierten Kurve die Ablenk-Mitte der Ablenkvorrichtung in eingebautem Zustand in einem Fahrzeug neben, vorzugsweise horizontal neben der Längsachse des Fahrzeugs konfiguriert. Dadurch kann erreicht werden, dass der Fahrzeugscheinwerfer in einem in ein Fahrzeug eingebautem Zustand eine homogene Kurvenlicht-Lichtverteilung erzeugt.

Es ist vorteilhaft, wenn die Leucht-Intensität des Leuchtmittels durch eine Puls-Weiten-Modulation gesteuert wird. Dadurch kann die Intensität präzise und einfach in einer digitalen Form gesteuert werden.

Es ist besonders günstig, wenn die Ablenkvorrichtung einen steuerbaren Reflektor in Form eines Mikro-Elektro-Mechanischen-Systems umfasst. Dadurch kann eine kostengünstige Realisierung eines erfindungsgemäßen Scheinwerfers erreicht werden.

Ferner ist es günstig, wenn das Verlaufs-Sensormittel und/ oder das Geschwindigkeits-Sensormittel zumindest einen optischen Sensor, vorzugsweise zumindest eine Kamera, und/ oder ein satellitengestütztes Navigationssystem umfasst, beziehungsweise auf Daten eines solchen Navigationssystems zugreift, welche von einen Navigationssystem des Fahrzeugs beispielsweise über einen Fahrzeugbus, wie einem CAN-Bus, bereitgestellt werden. Dadurch kann eine kostengünstige Realisierung eines erfindungsgemäßen Scheinwerfers erreicht werden.

Außerdem ist es günstig, wenn das Verlaufs-Sensormittel und das Geschwindigkeits-Sensormittel zumindest einen gemeinsamen Sensor verwenden. Dadurch kann eine einfache und kostengünstige Realisierung eines erfindungsgemäßen Scheinwerfers erreicht werden.

Eine weitere Ausführungsform der Erfindung sieht einen Kraftfahrzeug-Scheinwerfersystem der eingangs genannten Art vor, wobei das Kraftfahrzeug-Scheinwerfersystem ferner ein Verlaufs-Sensormittel und ein Geschwindigkeits-Sensormittel umfasst, und die zumindest eine Steuervorrichtung konfiguriert ist, das erfindungsgemäße Verfahren auszuführen.

Eine besonders vorteilhafte Weiterentwicklung wird erreicht, wenn der erfindungsgemäße Fahrzeugscheinwerfer ein Zusatzfernlicht-Scheinwerfer ist. Dadurch kann erreicht werden, dass die Fernlicht-Lichtverteilung des Haupt-Fernlichtscheinwerfers mit der variablen Fernlicht-Lichtverteilung des Zusatzscheinwerfers überlagert wird und dadurch eine besonders günstige Gesamtlichtverteilung erreicht wird.

Alternativ dazu kann eine erfindungsgemäße variable Fernlicht-Lichtverteilung in Form einer Haupt-Fernlicht-Lichtverteilung erzeugt werden, das heißt, dass kein Zusatz-Fernlicht eingesetzt wird.

Unter dem Begriff "Scheinwerfer" ist im Zusammenhang mit der vorliegenden Erfindung nicht nur ein kompletter Fahrzeugscheinwerfer zu verstehen, sondern ebenso eine Beleuchtungseinheit, welche beispielsweise zusammen mit anderen Beleuchtungseinheiten Teil eines Scheinwerfers bilden kann.

Die Erfindung ist im Folgenden unter Bezugnahme auf die Zeichnungen beispielhaft näher erläutert. In diesen zeigen:
- Fig. 1: ein Fahrzeug mit Scheinwerfern nach der Erfindung in einer Ansicht von oben,
- Fig. 2: ein Blockschaltbild einer Vorrichtung zur Ausführung eines erfindungsgemäßen Verfahrens,
- Fig. 3: ein Fahrzeugscheinwerfer, wie es auch aus dem Stand der Technik bekannt ist, mit drei Lichtquellen und einen um eine Achse verschwenkbaren Ablenkelement,
- Fig. 3a: ein Konversionsmittel eines Fahrzeugscheinwerfers nach Fig. 3,
- Fig. 4: ein Fahrzeugscheinwerfer, wie aus dem Stand der Technik bekannt, mit drei Lichtquellen und einen um zwei Achsen verschwenkbaren Ablenkelement,
- Fig. 4a: ein Konversionsmittel eines Fahrzeugscheinwerfers nach Fig. 4,
- Fig. 5: eine Ausführungsform des erfindungsgemäßen Verfahrens,
- Fig. 5a: Beispiele für einen Ablenk-Parametersatz einen Leucht-Parametersatz,
- Fig. 6: eine typische Fernlicht-Lichtverteilung,
- Fig. 7: eine Fernlicht-Lichtverteilung für eine Geradeausfahrt,
- Fig. 8: eine Darstellung von Skalierungsbereichen für eine Fernlicht-Lichtverteilung für eine Geradeausfahrt,
- Fig. 9: eine nach rechts abgelenkte Lichtverteilung nach Fig. 7,
- Fig. 10: eine nach links abgelenkte Lichtverteilung nach Fig. 7,
- Fig. 11: eine Darstellung von Positionierungs- und Skalierungsbereichen für eine Fernlicht-Lichtverteilung für einen nach links verlaufenden Straßenverlauf,
- Fig. 12: einen horizontalen Schnitt durch die Lichtverteilung von Fig. 6,
- Fig. 13: einen horizontalen Schnitt durch die Lichtverteilung von Fig. 7,
- Fig. 14: einen horizontalen Schnitt durch die Lichtverteilung von Fig. 9,
- Fig. 15: eine Darstellung der Ablenk-Geschwindigkeit in Abhängigkeit des Ablenk-Winkles für eine Geradeausfahrt,
- Fig. 16: eine Darstellung der Ablenk-Geschwindigkeit in Abhängigkeit des Ablenk-Winkles für eine Linkskurve,
- Fig. 17: eine Darstellung der Ablenk-Geschwindigkeit in Abhängigkeit des Ablenk-Winkles für eine Rechtskurve.

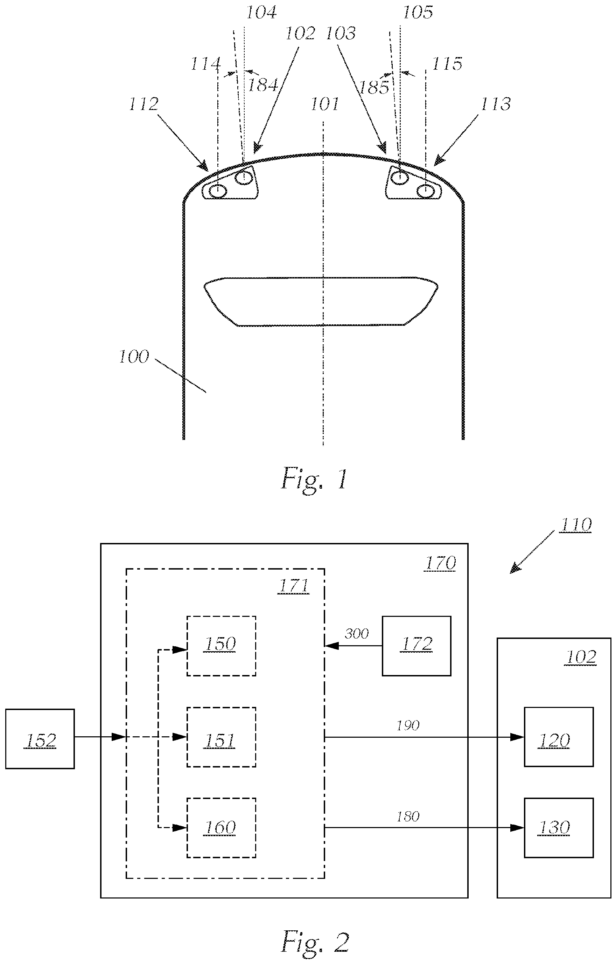

Unter Bezugnahme auf **Fig. 1** bis **Fig. 17** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht gezeigt.

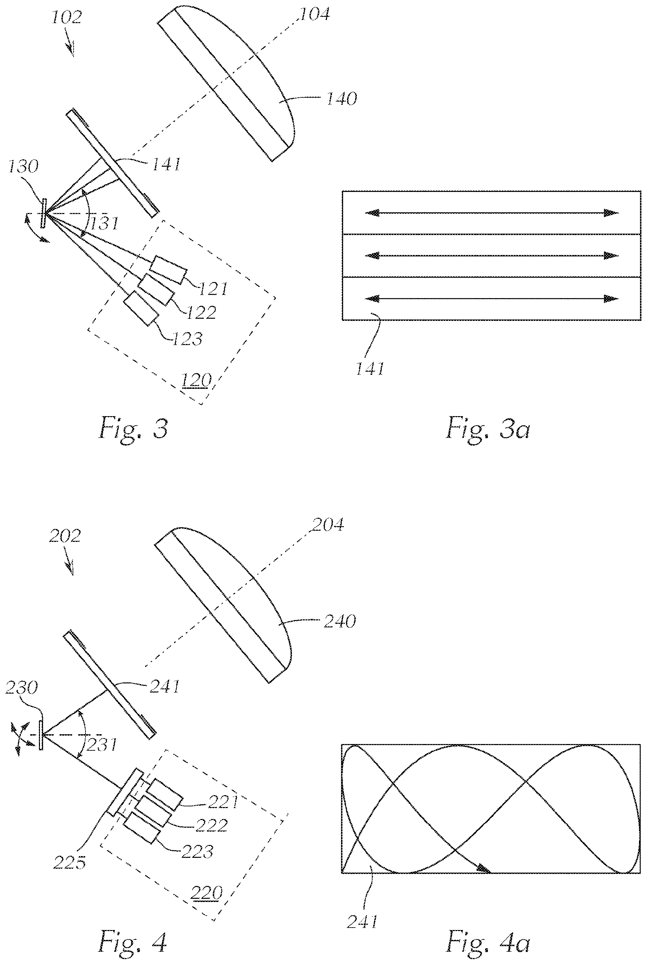

In Hinblick auf die geforderten Lichtleistung bzw. das gewünschte Lichtmuster sind meist mehrere Lichtquellen erforderlich, wobei die dazu zum Einsatz kommenden Systeme weiter unten an Hand der Fig. 3 bis Fig. 4a kurz erläutert werden sollen.

**Fig. 1** zeigt ein Fahrzeug 100 mit Scheinwerfern 102, 103 nach der Erfindung, sowie Hauptscheinwerfern 112, 113 in einer Ansicht von oben. Eine Längsachse 101 des Fahrzeugs 100 ist außerdem zu erkennen. Die Hauptscheinwerfer 112, 113 sind dazu eingerichtet, Grundlichtverteilungen z.B. in Form eines gesetzeskonformen Abblendlichtes oder eines Fernlichtes zu erzeugen. Die Fahrzeugscheinwerfer 102, 103 sind in diesem Beispiel jeweils als Zusatzfernlicht-Scheinwerfer ausgeführt.

Es ist klar, dass der Hauptscheinwerfer und der Zusatzscheinwerfer gemäß diesem Ausführungsbeispiel nicht immer baulich getrennt ausgeführt sein müssen, sondern in einem gemeinsamen Scheinwerfergehäuse in Form von jeweiligen Lichtmodulen realisiert sein können. Dabei kann der gemeinsame Scheinwerfer beispielsweise ein Fernlicht-Lichtmodul mit einer Hauptlicht-Funktion gemäß dem Hauptscheinwerfer 112, 113 des Ausführungsbeispiels umfassen, welcher weiter unten näher beschriebenen ist, und welcher eine Grundlichtverteilung erzeugt. Zusätzlich kann der gemeinsame Scheinwerfer ein Zusatzlichtmodul mit einer Zusatzfernlicht- Lichtfunktion gemäß dem Fahrzeugscheinwerfer 102, 103 des Ausführungsbeispiels umfassen, welcher weiter unten auch näher beschriebenen ist.

Die Leuchtrichtung der Scheinwerfer 102, 103 lässt sich, ausgehend von einer nicht verschwenkten Grundstellung, in der eine Abstrahlrichtung 104,105 der Scheinwerfern Leuchteinrichtung 102, 103 parallel zur Längsachse 101 orientiert ist, um jeweils einen Ablenk-Winkel 184, 185 verstellen. Die Ablenkung kann in Einbaulage der Scheinwerfer 102, 103 im Fahrzeug 100 in horizontaler Richtung auf beide Seiten, ausgehend von der Grundstellung, erfolgen. Dabei können für die beiden Scheinwerfer 102, 103 unterschiedliche oder auch gleiche Ablenk-Winkel 184, 185 eingestellt sein, um beispielsweise eine gewählte Lichtfunktion in der Leuchtintensität zu verstärken oder eine gemeinsame Leuchtbreite zu vergrößern.

In **Fig. 2** ist ein Blockschaltbild einer Vorrichtung in Form eines Kraftfahrzeug-Scheinwerfersystems 110 zur Ausführung des erfindungsgemäßen Verfahrens gezeigt. Eine Ablenkvorrichtung 130, welche über einen Ablenk-Parametersatz 180 konfigurierbar ist, und ein Leuchtmittel 120, welches über einen Leucht-Parametersatz 190 konfigurierbar ist, sind mit einer Steuervorrichtung 170 verbunden, welche ferner mit einem Verlaufs-Sensormittel 150, einem Gegenverkehrs-Sensormittel 151 und einem Geschwindigkeits-Sensormittel 160 verbunden sind. Die Steuervorrichtung 170 umfasst einen Prozessor 171 und einen Speicher 172, und ist konfiguriert, das erfindungsgemäße Verfahren auszuführen. Im Speicher 172 ist eine vordefinierte Fernlicht-Lichtverteilung 300 gespeichert. Das Verlaufs-Sensormittel 150, das Gegenverkehrs-Sensormittel 151 und das Geschwindigkeits-Sensormittel 160 ist aus einem gemeinsam genutzten Kamera-Sensor 152 und jeweils einem Sensor-Auswertungsprogramm, das auf dem Prozessor 171 ausgeführt wird, gebildet.

Ein Kraftfahrzeug 100 kann die Vorrichtung der Fig. 2 umfassen.

Aus den erfindungsgemäßen Leuchteinrichtungen, bzw. Scheinwerfern 102, 103 des Fahrzeugs 100 der Fig. 1 und der Vorrichtung der Fig. 2 lässt sich ein Kraftfahrzeug-Scheinwerfersystem 110 bilden, das zur Erzeugung einer Kurvenlicht-Lichtfunktion einer Fernlicht-Lichtverteilung eingerichtet ist. Es können unterschiedliche Betriebsmodi für das Kraftfahrzeug-Scheinwerfersystem 110 vorgesehen sein. Zum einen können die beiden Scheinwerfer 102, 103 gleichermaßen angesteuert werden. Alternativ kann auch vorgesehen sein, dass ein linker Scheinwerfer 102 und ein rechter Scheinwerfer 103 des Fahrzeugs 100 unterschiedliche Fernlichtfunktionen bereitstellen. Beispielsweise kann der linke Scheinwerfer die zuvor beschriebene, variable Lichtfunktion verwirklichen, und der rechte Scheinwerfer eine statische Fernlicht-Lichtverteilung nach dem Stand der Technik projizieren, wodurch ein variables, gemeinsames Lichtbild erzeugt werden kann.

**Fig. 3** zeigt einen Fahrzeugscheinwerfer 102, bei dem Laserstrahlen von Leuchtmitteln 120 über eine Ablenkvorrichtung 130 ablenkt werden, wobei zumindest eine Laserdiode, gezeigt sind drei Laserdioden 121, 122, 123, für den Betrieb notwendig ist. In der beispielhaft gezeigten Ausführung lenkt eine Ablenkvorrichtung 130, welches beispielsweise als Mikroablenkeinheit mit einem Mikrospiegel ausgebildet sein kann, die Laserstrahlen der zumindest einen Lichtquelle 121, 122, 123 in einer Richtung ab. Beispielsweise, wie in der **Fig. 3a** durch Pfeile angedeutet, in horizontaler Richtung, wobei schematisch die Fläche auf einem Konversionselement 141 gezeigt ist, über welche der oder die Laserstrahlen sehr schnell abgelenkt ein Leuchtbild schreiben, das über eine Projektionsoptik 140 in Richtung der Abstrahlrichtung 104 dann als Leuchtbild auf die Straße projiziert wird. Die Abstrahlrichtung 104 kann durch eine Nulllage 131 definiert sein, in der der Ablenkspiegel nicht verstellt ist.

Mit anderen Worten umfasst der Scheinwerfer 102, 103 des Fahrzeugs 100 ein Leuchtmittel 120, eine Ablenkvorrichtung 130 und eine Projektionsoptik 140. Das Leuchtmittel 120 ist eingerichtet, Licht in Richtung der Ablenkvorrichtung 130 zu emittieren, die das Licht zumindest teilweise in Richtung der Projektionsoptik 140 ablenkt und vor dem Fahrzeug 100 ein Lichtbild erzeugt, wobei die Ablenkvorrichtung 130 von einer Steuervorrichtung 170 mittels eines Ablenk-Parametersatzes 180 konfigurierbar ist.

Analog dazu zeigen **Fig. 4** und **Fig. 4a** einen Fahrzeugscheinwerfer 202 des Kraftfahrzeug-Scheinwerfersystems 110 mit einem Ablenkvorrichtung 230, welches einen Lichtstrahl in zwei zueinander orthogonalen Richtungen ablenken kann. Hier werden im Gegensatz zur Ausführung nach Fig. 3 die Laserstrahlen durch Leuchtmittel 220 in Form dreier Laserdioden 221, 222, 223 mit Hilfe eines Primäroptik 225 zu einem Strahl gewünschten Querschnitts fokussiert und durch die Ablenkvorrichtung 230 auf das Konversionselement 241 periodisch um zwei Achsen abgelenkt. In Fig. 4a ist eine Lissajous-Figur gezeigt, die man beispielsweise als Ergebnis einer solchen Ablenkung in zwei Richtungen erhält. Ferner weist der Fahrzeugscheinwerfer 202 eine Projektionsoptik 240 auf.

Die Abstrahlrichtung 204 kann durch eine Nulllage 231 definiert sein, in der der Ablenkspiegel nicht verstellt ist.

Der dargestellte Fahrzeugscheinwerfer 202 kann analog zur Figur 1 für ein Fahrzeug 100 und den gezeigten Scheinwerfern 102, 103 verwendet werden.

Die gezeigten Fahrzeugscheinwerfer 102 und 202 sind ein repräsentatives Beispiel, die Ausgangspunkt der Erfindung sein können, doch ist diese Erfindung nicht auf die Verwendung eines solchen Fahrzeugscheinwerfers eingeschränkt.

Die Figuren zeigen nur die wesentlichen Bestandteile der Systeme, welche Grundlage der Erfindung sein können. Es sollte klar sein, dass eine Kraftfahrzeug-Beleuchtungseinrichtung, insbesondere ein Scheinwerfer, viele weitere Elemente für einen ordnungsgemäßen Betrieb benötigt, beispielsweise Kühlmittel oder optische Elemente, welche beispielsweise das Laserlicht in der Intensitätsverteilung und/ oder Querschnittsform beeinflussen, oder Verstelleinrichtungen und Halterungen, welche der Übersichtlichkeit halber nicht gezeigt sind.

Die Projektionsoptik 140, 240 kann refraktive und/ oder diffraktive Optik-Elemente und/ oder Reflektorelemente zur Formung der Lichtverteilung umfassen.

Ferner gelten die Ausführungen der Fig. 3 und 3a.

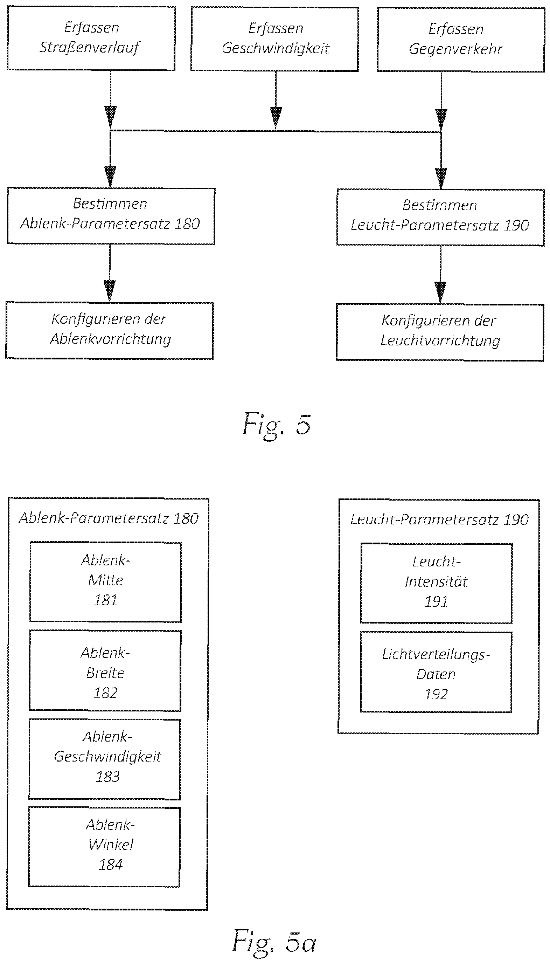

Fig. **5** zeigt eine Ausführungsform des erfindungsgemäßen Verfahrens, das zur Ausführung mit einem Scheinwerfer 102, 103 beziehungsweise 202 der Figuren 1 bis 4 vorgesehen ist, und die Figuren in einer Zusammenschau zu verstehen sind.

Folgende Schritte sind zur Erzeugung einer Kurvenlicht-Lichtfunktion einer Fernlicht-Lichtverteilung vorgesehen:
- Erfassen des Straßenverlaufs durch ein Verlaufs-Sensormittel 150 und der Geschwindigkeit des Fahrzeugs 100 durch ein Geschwindigkeits-Sensormittel 160, welche von einer Steuervorrichtung 170 des Fahrzeugs 100 umfasst sind,
- Bestimmen des Ablenk-Parametersatzes 180 aus dem Straßenverlauf und der Geschwindigkeit des Fahrzeugs 100 durch die Steuervorrichtung 170, die mit der Ablenkvorrichtung 130 verbunden ist, welcher eine Ablenk-Mitte 181, 281, 381, eine Ablenk-Breite 182, 282, 382 und eine Ablenk-Geschwindigkeit 183 umfasst,
- Bestimmen eines Leucht-Parametersatzes 190 aus dem Straßenverlauf und der Geschwindigkeit des Fahrzeugs 100 durch die Steuervorrichtung 170, welcher zur Ansteuerung des Leuchtmittels 120 vorgesehen ist und eine Leucht-Intensität 191, sowie eine vordefinierte Fernlicht-Lichtverteilung 300 in Form von Lichtverteilungs-Daten 192 umfasst,
- Konfigurieren der Ablenkvorrichtung 130 mit dem zuvor bestimmten Ablenk-Parametersatz 180 und einer in der Steuervorrichtung 170 gespeicherten Fernlicht-Lichtverteilung 300 derart, dass die Fernlicht-Lichtverteilung 300 mit dem Ablenk-Parametersatz 180 innerhalb eines vorgegebenen Abbildungsbereichs der Ablenkvorrichtung 130 positioniert und skaliert wird, und Ansteuern des Leuchtmittels 120 mit dem zuvor bestimmten Leucht-Parametersatz 190 derart, dass die Intensität der projizierten Fernlicht-Lichtverteilung mit dem Leucht-Parametersatz 190 moduliert wird.

In diesem Zusammenhang wird unter einem vorgegebenen Abbildungsbereich der Bereich des Ablenk-Winkels verstanden, innerhalb dessen ein optimaler Betrieb der Ablenkvorrichtung gewährleistet werden kann. Die Ablenkvorrichtung kann einen über diesen Abbildungsbereich hinausgehenden Ablenk-Winkel vorsehen, der jedoch häufig mit Einschränkungen hinsichtlich Linearität, thermischer oder mechanischer Belastung verbunden ist.

In **Fig. 5a** sind Beispiele für einen Ablenk-Parametersatz 180 einen Leucht-Parametersatz 190 gezeigt.

Aus einer Zusammenschau der Figuren 1 bis 5a sind weitere Ausführungsformen der Erfindung ersichtlich, die im Weiteren beschrieben werden.

Das Verlaufs-Sensormittel 150 ist eingerichtet, den Straßenverlauf in einem Abstand von zumindest 50 m, bevorzugt zumindest 150 m, besonders bevorzugt zumindest 300 m vor dem Fahrzeug 100 zu erfassen. Das Verlaufs-Sensormittel 150 ist ferner eingerichtet, Gegenverkehrs-Daten durch ein Gegenverkehrs-Sensormittel 151, welches bevorzugt einen optischen Sensor, insbesondere eine Kamera 152, beinhaltet, welcher optische Sensor mit der Steuervorrichtung 170 verbunden oder von der Steuervorrichtung 170 umfasst ist, zu erfassen. Alternativ oder zusätzlich kann der Straßenverlauf auch durch Navigationsdaten eines satellitengestützten Navigationssystems bestimmt werden. Dazu kann das Verlaufs-Sensormittel 150 und/ oder das Gegenverkehrs-Sensormittel 151 ein Navigationssystem umfassen oder Navigationsdaten eines Navigationssystem des Fahrzeugs verwenden, welche beispielsweise über einen Fahrzeugbus, wie einem CAN-Bus, bereitgestellt werden. Die Gegenverkehrs-Daten beschreiben den, dem Fahrzeug 100 auf einer benachbarten Fahrspur entgegenkommenden Verkehr. Die Gegenverkehrs-Daten können bei der Bestimmung des Straßenverlaufs optional, das heißt zusätzlich verwendet werden.

Der Straßenverlauf und die Gegenverkehrs-Daten können durch Bildanalyse-Algorithmen in Form eines Computer-Programms erfolgen, die ein Kamerabild der Kamera 152 auswerten und durch den Prozessor 171 ausgeführt werden. Das Computer-Programm kann im Speicher 172 gespeichert sein.

Aus dem erfassten Straßenverlauf können durch die Steuervorrichtung 170 aus dem erfassten Straßenverlauf Lichtverteilungs-Daten 192 bestimmt werden, welche zumindest teilweise den erfassten Straßenverlauf beschreiben.

Die vordefinierte Fernlicht-Lichtverteilung 300 ist eine Fernlicht-Lichtverteilung, die in der Steuervorrichtung 170 gespeichert ist.

In einer Ausführungsform der Erfindung ist das Kraftfahrzeug-Scheinwerfersystem 110 mit zumindest einem Fahrzeugscheinwerfer 102, 103, 202 eingerichtet, das erfindungsgemäße Verfahren auszuführen. Ein Fahrzeug 100 kann das Kraftfahrzeug-Scheinwerfersystem 110 beinhalten.

Das Leuchtmittel 120 beziehungsweise 220 umfasst zumindest eine Lichtquelle 121, 122, 123, beziehungsweise 221, 222, 223 in Form einer LED oder Laser-Diode, dessen Lichtemission vorzugsweise durch eine Primäroptik (225) gebündelt oder geformt wird.

In einer Anordnung gemäß Fig. 4 wird die Lichtemission der Leuchtmittel 220 durch eine Primäroptik 225 gebündelt oder geformt.

Das Kraftfahrzeug-Scheinwerfersystem 110 der Fig. 1 bis 4 umfasst ferner ein Konversionsmittel 141, 241, das zwischen der Ablenkvorrichtung 130, 230 und der Projektionsoptik 140, 240 im Strahlengang des von der Ablenkvorrichtung 130, 230 abgelenkten Lichts in einer Brennebene der Projektionsoptik 140, 240 gelegen ist. Das Konversionsmittel 141, 241 ist dazu eingerichtet, das abgelenkte Licht in beispielsweise weißes Licht zu konvertieren, falls das durch die Lichtquelle 121, 122, 123, beziehungsweise 221, 222, 223 emittierte Licht in einem nicht sichtbaren Bereich des Lichtspektrums, beispielsweise im Ultraviolett-Bereich, gelegen ist.

Die Ablenkvorrichtung 130 ist in einem, in ein Fahrzeug 100 eingebautem Zustand eingerichtet, eine horizontal orientierte Ablenkung eines einfallenden Lichtstrahls, welcher durch das Leuchtmittel 120 emittiert und auf die Ablenkvorrichtung 130 gerichtet ist, durchzuführen. Die Intensität des Leuchtmittels 120 wird reduziert, sogar bis auf Null, wenn ein Betrag eines Grenzwerts 301, 302 für den Ablenk-Winkel 184, 185 überschritten wird.

Im Fall einer durch die Steuervorrichtung 170 in einem bestimmten Straßenverlauf detektierten Kurve ist die Ablenk-Mitte 181 der Ablenkvorrichtung 130, 230 in eingebautem Zustand in einem Fahrzeug 100 neben, vorzugsweise horizontal neben der Längsachse 101 des Fahrzeugs 100 konfiguriert.

Die Leucht-Intensität 191 des Leuchtmittels 120 wird durch eine Puls-Weiten-Modulation gesteuert.

Die Ablenkvorrichtung 130, 230 umfasst einen steuerbaren Reflektor in Form eines Mikro-Elektro-Mechanischen-Systems (MEMS).

Das Verlaufs-Sensormittel 150, das Gegenverkehrs-Sensormittel 151 und das Geschwindigkeits-Sensormittel 160 verwenden in einer Ausführungsvariante gemeinsam denselben optischen Sensor in Form einer Kamera 152, der mit der Steuervorrichtung 170 verbunden oder von dieser umfasst ist.

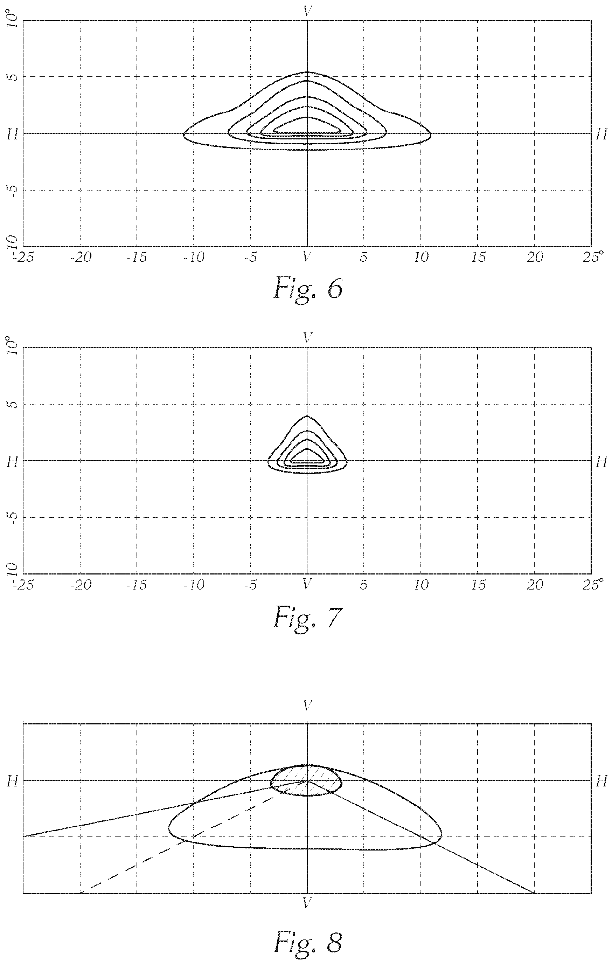

In **Fig. 6** ist eine typische Fernlicht-Lichtverteilung auf einem planen Messschirm, beispielsweise 25 Meter vor dem Fahrzeug, positioniert, dargestellt. Die Achsen sind horizontal und vertikal orientiert und weisen eine Winkel-Skala auf.

In **Fig. 7** ist die Lichtverteilung aus Fig. 6 gezeigt, die in der projizierten Größe skaliert ist. Dies kann dazu verwendet werden, einen entfernt gelegenen geraden Straßenverlauf bei zunehmender Geschwindigkeit besser auszuleuchten. Mit anderen Worten kann zusätzlich abhängig von der Geschwindigkeit des Fahrzeugs die Ablenk-Breite der Ablenkvorrichtung 130, 230 mit zunehmender Geschwindigkeit verkleinert werden.

In **Fig. 8** sind zwei Bereiche dargestellt, etwa jener nach Fig. 6 und etwa jener nach Fig. 7, aus denen ersichtlich sein soll, zwischen welchen Bereichen eine Skalierung der Fernlicht-Lichtverteilung in einer Projektion in den Verkehrsraum vor dem Fahrzeug bei einer Geradeausfahrt erfolgen kann.

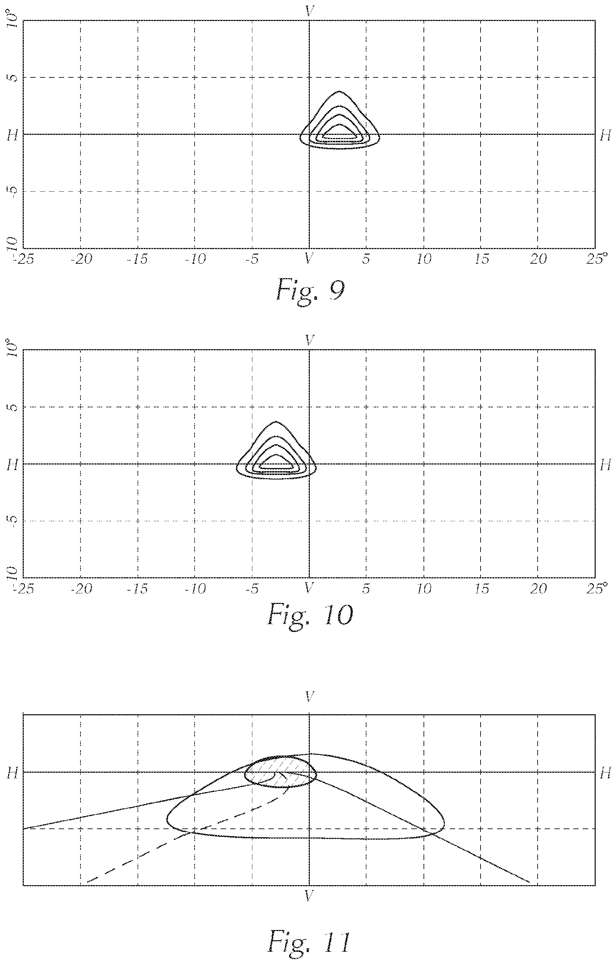

**Fig. 9** zeigt die skalierte Lichtverteilung aus Fig. 7, die für eine detektierte Recht-Kurve des Straßenverlaufs nach rechts abgelenkt ist.

**Fig. 10** zeigt analog dazu eine nach links abgelenkte, skalierte Lichtverteilung nach Fig. 7.

In **Fig. 11** sind wiederum zwei Bereiche dargestellt, etwa jener nach Fig. 6 und etwa jener nach Fig. 10, aus denen ersichtlich sein soll, zwischen welchen Bereichen eine Skalierung und Verschwenkung der Fernlicht-Lichtverteilung in einer Projektion vor das Fahrzeug bei einem nach links verlaufenden Straßenverlauf erfolgen kann.

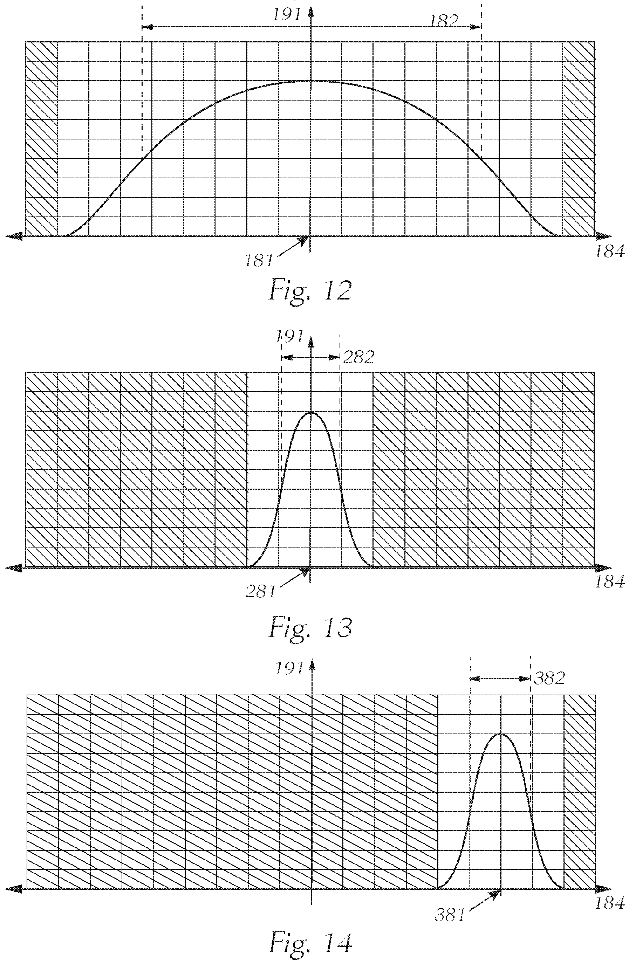

**Fig. 12** zeigt einen Verlauf einer Leucht-Intensität 191 als horizontalen Schnitt durch die Lichtverteilung von Fig. 6 mit einer großen Ablenk-Breite 182 der Lichtverteilung. Auf der Abszisse ist der Ablenk-Winkel 184, 185 und auf der Ordinate die Leucht-Intensität 191 aufgetragen. Die Ablenk-Mitte 181 der Ablenkvorrichtung 130, 230 liegt für eine Geradeausfahrt des Fahrzeugs 100 im Ursprung des Koordinatensystems.

**Fig. 13** zeigt einen Verlauf einer Leucht-Intensität 191 als horizontalen Schnitt durch die Lichtverteilung von Fig. 7 mit einem geringen Ablenk-Breite 282 der Lichtverteilung, wobei die in Relation zur Ablenk-Breite 182 der Fig. 12 geringere Ablenk-Breite 282 der Ablenkvorrichtung 130, 230 beispielsweise durch eine detektierte höhere Geschwindigkeit des Fahrzeugs 100 konfiguriert sein kann. Die Ablenk-Mitte 281 liegt für eine Geradeausfahrt des Fahrzeugs 100 im Ursprung des Koordinatensystems.

**Fig. 14** zeigt einen Verlauf einer Leucht-Intensität 191 als horizontalen Schnitt durch die Lichtverteilung von Fig. 9 mit einer geringen Ablenk-Breite 382 analog zur Ablenk-Breite 282 der Fig. 13 der Lichtverteilung nach Fig. 7, wobei die Ablenk-Mitte 381 der Lichtverteilung für eine Rechts-Kurve nach rechts abgelenkt beziehungsweise verschoben ist.

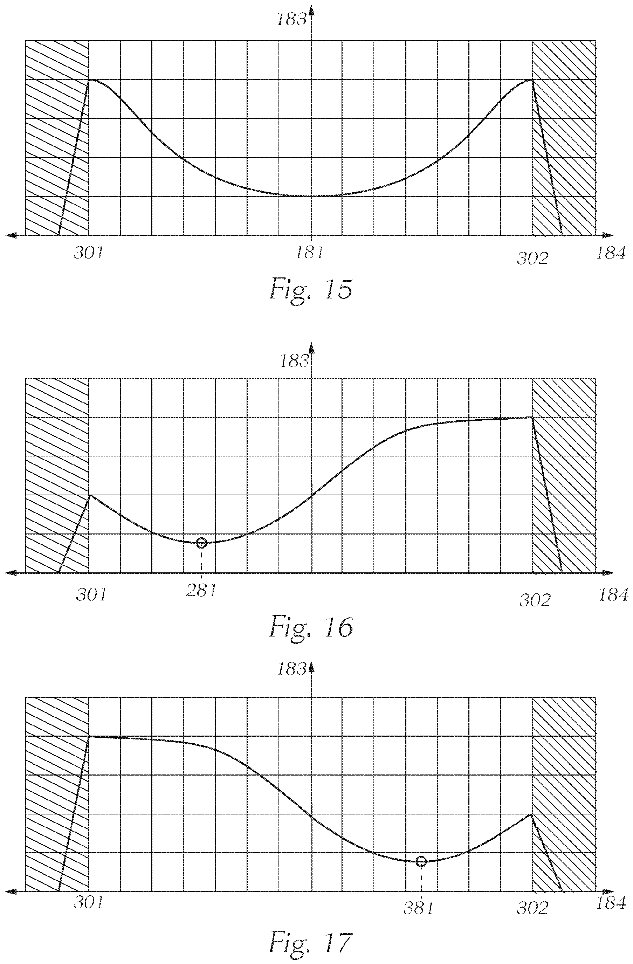

**Fig. 15** stellt die Ablenk-Geschwindigkeit 183 der Ablenkvorrichtung 130, 230 in Abhängigkeit des Ablenk-Winkles 184, 185 für eine Geradeausfahrt dar.

Es ist erkennbar, dass die Ablenk-Geschwindigkeit 183 in Abhängigkeit vom Ablenk-Winkel 184, 185 der Ablenkvorrichtung 130 variiert. Ausgehend von der Ablenk-Mitte 181 wird die Ablenk-Geschwindigkeit 183 mit zunehmendem Betrag des Ablenk-Winkels 184, 185 größer. Bei Überschreiten oder Unterschreiten eines unteren Grenzwerts 301 beziehungsweise eines oberen Grenzwerts 302 für den Ablenk-Winkel 184, 185 wird die Ablenk-Geschwindigkeit 183 wieder geringer, beziehungsweise zu Null. Mit anderen Worten kann bei Überschreiten eines Grenzwerts für den Betrag des Ablenk-Winkels 184, 185, wobei der Grenzwert dem Betrag eines unteren Grenzwerts 301 oder einem oberen Grenzwert 302 entspricht, die Ablenk-Geschwindigkeit 183 wieder geringer, bevorzugt zu Null, werden.

Der untere Grenzwert 301 und der obere Grenzwert 302 für den Ablenk-Winkel 184, 185 ist in der Figur erkennbar, der den maximalen Verschwenkbereich für einen optimalen Betrieb der Ablenkvorrichtung 130, 230 beschreibt. Die Ablenk-Mitte 181 ist ebenfalls zu erkennen, die den sogenannten "Lichtschwerpunkt" der Lichtverteilung beschreibt.

**Fig. 16** stellt die Ablenk-Geschwindigkeit 183 in Abhängigkeit des Ablenk-Winkles 184, 185 für eine Linkskurve dar, für die die Ablenk-Mitte 281 entsprechend nach links verschoben ist.

**Fig. 17** stellt die Ablenk-Geschwindigkeit 183 in Abhängigkeit des Ablenk-Winkles 184, 185 für eine Rechtskurve dar, für die die Ablenk-Mitte 381 entsprechend nach rechts verschoben ist.

### Bezugszeichenliste:

- 100: Fahrzeug
- 101: Längsachse
- 102,103, 202: Scheinwerfer
- 104,105, 204: Scheinwerferachse
- 110: Kraftfahrzeug-Scheinwerfersystem
- 112,113: Hauptscheinwerfer
- 114,115: Hauptscheinwerferachse
- 120,220: Leuchtmittel
- 121, 122, 123, 221, 222, 223: Lichtquelle
- 225: Primäroptik
- 130, 230: Ablenkvorrichtung
- 131, 231: Nulllage
- 140, 240: Projektionsoptik
- 141, 241: Konversionsmittel
- 150: Verlaufs-Sensormittel
- 151: Gegenverkehrs-Sensormittel
- 152: Kamera-Sensor
- 160: Geschwindigkeits-Sensormittel
- 170: Steuervorrichtung
- 171: Prozessor
- 172: Speicher
- 180: Ablenk-Parametersatz
- 181, 281, 381: Ablenk-Mitte
- 182, 282, 382: Ablenk-Breite
- 183: Ablenk-Geschwindigkeit
- 184,185: Ablenk-Winkel
- 190: Leucht-Parametersatz
- 191: Leucht-Intensität
- 192: Lichtverteilungs-Daten
- 300: vordefinierte Fernlicht-Lichtverteilung
- 301, 302: Grenzwert für Ablenk-Winkel

## Patentansprüche

1. Verfahren zur Erzeugung einer variablen Fernlicht-Lichtverteilung durch zumindest einen Scheinwerfer (102, 103, 202) eines Fahrzeugs (100), welcher ein Leuchtmittel (120, 220), eine Ablenkvorrichtung (130, 230) und eine Projektionsoptik (140, 240) umfasst, und das Leuchtmittel (120, 220) eingerichtet ist, Licht in Richtung der Ablenkvorrichtung (130, 230) zu emittieren, die das Licht in Richtung der Projektionsoptik (140, 240) zur Projektion vor das Fahrzeug (100) ablenkt und vor dem Fahrzeug (100) ein Lichtbild erzeugt, wobei die Ablenkvorrichtung (130, 230) von einer Steuervorrichtung (170) mittels eines Ablenk-Parametersatzes (180) konfigurierbar ist, wobei das Verfahren folgende Schritte zur Erzeugung einer Kurvenlicht-Lichtfunktion einer Fernlicht-Lichtverteilung umfasst:
- Erfassen des Straßenverlaufs durch ein Verlaufs-Sensormittel (150) und der Geschwindigkeit des Fahrzeugs (100) durch ein Geschwindigkeits-Sensormittel (160), welche von der Steuervorrichtung (170) des Fahrzeugs (100) umfasst sind,
- Bestimmen des Ablenk-Parametersatzes (180) aus dem Straßenverlauf und der Geschwindigkeit des Fahrzeugs (100) durch die Steuervorrichtung (170), welcher eine Ablenk-Mitte (181, 281, 381), eine Ablenk-Breite (182, 282, 382) und eine Ablenk-Geschwindigkeit (183) umfasst,
- Bestimmen eines Leucht-Parametersatzes (190) aus dem Straßenverlauf und der Geschwindigkeit des Fahrzeugs (100) durch die Steuervorrichtung (170), welcher zur Ansteuerung des Leuchtmittels (120, 220) vorgesehen ist und eine Leucht-Intensität (191), sowie eine vordefinierte Fernlicht-Lichtverteilung (300) in Form von Lichtverteilungs-Daten (192) umfasst, **dadurch gekennzeichnet, dass** das Verfahren den folgenden Schritt umfasst:
- Konfigurieren der Ablenkvorrichtung (130, 230) mit dem zuvor bestimmten Ablenk-Parametersatz (180) und einer in der Steuervorrichtung (170) gespeicherten Fernlicht-Lichtverteilung (300) derart, dass die Fernlicht-Lichtverteilung (300) mit dem Ablenk-Parametersatz (180) innerhalb eines vorgegebenen Abbildungsbereichs der Ablenkvorrichtung (130, 230) positioniert und skaliert wird, und Ansteuern des Leuchtmittels (120, 220) mit dem zuvor bestimmten Leucht-Parametersatz (190) derart, dass die Intensität der projizierten Fernlicht-Lichtverteilung mit dem Leucht-Parametersatz (190) moduliert wird, wobei die Ablenk-Geschwindigkeit (183) in Abhängigkeit von einem Ablenk-Winkel (184, 185) der Ablenkvorrichtung (130, 230) variierbar ist und vorzugsweise ausgehend von der Ablenk-Mitte (181, 281, 381) mit zunehmendem Betrag des Ablenk-Winkels (184, 185) größer wird und vorzugsweise bei Überschreiten eines Grenzwerts für den Betrag des Ablenk-Winkels (184, 185), wobei der Grenzwert dem Betrag eines unteren Grenzwerts (301) oder einem oberen Grenzwert (302) entspricht, wieder geringer, bevorzugt zu Null wird, und wobei im Fall eines geraden Verlaufs des durch die Steuervorrichtung (170) bestimmten Straßenverlaufs, sowie mit zunehmender Geschwindigkeit, die Ablenk-Breite (182, 282, 382) der Ablenkvorrichtung (130, 230) verkleinert wird.

2. Verfahren nach Anspruch 1, **dadurch gekennzeichnet, dass** das Verlaufs-Sensormittel (150) eingerichtet ist, den Straßenverlauf in einem Abstand von zumindest 50 m, bevorzugt zumindest 150 m, besonders bevorzugt zumindest 300 m vor dem Fahrzeug (100) zu erfassen, und welches vorzugsweise eingerichtet ist, Gegenverkehrs-Daten durch ein Gegenverkehrs-Sensormittel (151), welches bevorzugt einen optischen Sensor, insbesondere eine Kamera (152), und/ oder ein satellitengestütztes Navigationssystem beziehungsweise auf Daten eines solchen Systems, welche von einen Navigationssystem des Fahrzeugs beispielsweise über einen Fahrzeugbus, wie einem CAN-Bus bereitgestellt werden, beinhaltet, der mit der Steuervorrichtung (170) verbunden oder von der Steuervorrichtung (170) umfasst ist, zu erfassen, die den, dem Fahrzeug (100) auf einer benachbarten Fahrspur entgegenkommenden Verkehr beschreiben und die Gegenverkehrs-Daten bei der Bestimmung des Straßenverlaufs verwendet werden.

3. Verfahren nach Anspruch 1 oder 2, **dadurch gekennzeichnet, dass** durch die Steuervorrichtung (170) aus dem erfassten Straßenverlauf Lichtverteilungs-Daten (192) bestimmt werden, welche zumindest teilweise den erfassten Straßenverlauf beschreiben.

4. Verfahren nach einem der vorhergehenden Ansprüche, **dadurch gekennzeichnet, dass** im Fall eines geraden Verlaufs des durch die Steuervorrichtung (170) bestimmten Straßenverlauf, sowie mit zunehmender Geschwindigkeit, die Ablenk-Breite (182, 282, 382) der Ablenkvorrichtung (130, 230) verkleinert wird.

5. Kraftfahrzeug-Scheinwerfersystem (110), umfassend zumindest einen Scheinwerfer (102, 103, 202), der eingerichtet ist eine variable Fernlicht-Lichtverteilung zu erzeugen, und zumindest eine Steuervorrichtung (170), **dadurch gekennzeichnet, dass** das Kraftfahrzeug-Scheinwerfersystem (110) ein Verlaufs-Sensormittel (150) und ein Geschwindigkeits-Sensormittel (160) umfasst, und die zumindest eine Steuervorrichtung (170) konfiguriert ist, das Verfahren nach einem der vorhergehenden Ansprüche auszuführen.

6. Kraftfahrzeug-Scheinwerfersystem (110) nach Anspruch 5, **dadurch gekennzeichnet, dass** das Leuchtmittel (120, 220) des Scheinwerfers (102, 103, 202) zumindest eine Lichtquelle (121, 122, 123, 221, 222, 223) in Form einer LED, vorzugsweise einer schmalbandig emittierenden LED oder Laser-Diode umfasst, dessen Lichtemission vorzugsweise durch eine Primäroptik (225) gebündelt oder geformt wird, sowie das Kraftfahrzeug-Scheinwerfersystem (110) vorzugsweise ein Konversionsmittel (141, 241) umfasst, das zwischen der Ablenkvorrichtung (130, 230) und der Projektionsoptik (140, 240) im Strahlengang des von der Ablenkvorrichtung (130, 230) abgelenkten Lichts in einer Brennebene der Projektionsoptik (140, 240) gelegen ist, oder das Konversionsmittel von dem Leuchtmittel (120, 220) umfasst ist, und das Konversionsmittel (141, 241) dazu eingerichtet ist, das abgelenkte Licht in beispielsweise weißes Licht zu konvertieren.

7. Kraftfahrzeug-Scheinwerfersystem (110) nach Anspruch 5 oder 6, **dadurch gekennzeichnet, dass** die Ablenkvorrichtung (130, 230) des Scheinwerfers (102, 103, 202) in eingebautem Zustand eingerichtet ist, eine horizontal orientierte Ablenkung eines einfallenden Lichtstrahls, welcher durch das Leuchtmittel (120, 220) emittiert und auf die Ablenkvorrichtung (130, 230) gerichtet ist, durchzuführen, wobei die Intensität des Leuchtmittels (120, 220) reduziert wird, vorzugsweise auf Null, wenn ein Betrag eines Grenzwerts (301, 302) für den Ablenk-Winkel (184, 185) überschritten wird.

8. Kraftfahrzeug-Scheinwerfersystem (110) nach einem der Ansprüche 5 bis 7, **dadurch gekennzeichnet, dass** im Fall einer durch die Steuervorrichtung (170) detektierten Kurve in einem bestimmten Straßenverlauf die Ablenk-Mitte (181, 281, 381) der Ablenkvorrichtung (130, 230) in eingebautem Zustand in einem Fahrzeug (100) neben, vorzugsweise horizontal neben der Längsachse (101) des Fahrzeugs (100) konfiguriert ist.

9. Kraftfahrzeug-Scheinwerfersystem (110) nach einem der Ansprüche 5 bis 8, **dadurch gekennzeichnet, dass** die Leucht-Intensität (191) des Leuchtmittels (120, 220) des Scheinwerfers (102, 103, 202) durch eine Puls-Weiten-Modulation gesteuert wird.

10. Kraftfahrzeug-Scheinwerfersystem (110) nach einem der Ansprüche 5 bis 9, **dadurch gekennzeichnet, dass** die Ablenkvorrichtung (130, 230) einen steuerbaren Reflektor in Form eines Mikro-Elektro-Mechanischen-Systems umfasst.

11. Kraftfahrzeug-Scheinwerfersystem (110) nach einem der Ansprüche 5 bis 10, **dadurch gekennzeichnet, dass** das Verlaufs-Sensormittel (150) und/ oder das Geschwindigkeits-Sensormittel (160) zumindest einen optischen Sensor, vorzugsweise zumindest eine Kamera (152), umfasst.

12. Kraftfahrzeug-Scheinwerfersystem (110) nach einem der Ansprüche 5 bis 11, **dadurch gekennzeichnet, dass** das Verlaufs-Sensormittel (150) und das Geschwindigkeits-Sensormittel (160) zumindest einen gemeinsamen Sensor verwenden.

13. Kraftfahrzeug-Scheinwerfersystem (110) nach einem der Ansprüche 5 bis 12, **dadurch gekennzeichnet, dass** der Scheinwerfer (102, 103, 202) ein Zusatzfernlicht-Scheinwerfer ist.

14. Kraftfahrzeug mit einem Kraftfahrzeug-Scheinwerfersystem (110) nach einem der Ansprüche 5 bis 13.

## Claims

1. Method for generating a variable high beam light distribution by at least one headlamp (102, 103, 202) of a vehicle (100), which comprises an illuminating means (120, 220), a deflecting device (130, 230) and a projection optic (140, 240), and the illuminating means (120, 220) is arranged to emit light in the direction of the deflecting device (130, 230) which deflects the light in the direction of the projection optics (140, 240) for projection in front of the vehicle (100) and generates a light image in front of the vehicle (100), the deflection device (130, 230) being configurable by a control device (170) by means of a deflection parameter set (180), the method comprising the following steps for generating a curve light function of a high beam light distribution:
- Detecting the road course by a course sensor means (150) and the speed of the vehicle (100) by a speed sensor means (160), which are comprised by the control device (170) of the vehicle (100),
- Determining by the control device (170) the deflection parameter set (180) from the road course and the speed of the vehicle (100), which comprises a deflection center (181, 281, 381), a deflection width (182, 282, 382) and a deflection speed (183),
- Determining by the control device (170) a luminous parameter set (190) from the road course and the speed of the vehicle (100), which is provided for controlling the luminous means (120, 220) and comprises a luminous intensity (191), as well as a predefined high beam light distribution (300) in the form of light distribution data (192), **characterized in that** the method comprises the following step:
- Configuring the deflection device (130, 230) with the previously determined deflection parameter set (180) and a high beam light distribution (300) stored in the control device (170) such that the high beam light distribution (300) with the deflection parameter set (180) is positioned and scaled within a predetermined imaging range of the deflection device (130, 230), and driving the illuminating means (120, 220) with the previously determined luminous parameter set (190) in such a way that the intensity of the projected main beam light distribution is modulated with the luminous parameter set (190), the deflection speed (183) being dependent on a deflection angle (184, 185) of the deflection device (130, 230) and preferably increasing starting from the deflection center (181, 281, 381) with increasing amount of the deflection angle (184, 185) and preferably when a limit value for the amount of the deflection angle (184, 185) is exceeded, wherein the limit value corresponds to the amount of a lower limit value (301) or an upper limit value (302), becomes smaller again, preferably to zero, and wherein in the case of a straight course of the road course determined by the control device (170), as well as with increasing speed, the deflection width (182, 282, 382) of the deflection device (130, 230) is reduced.

2. Method according to claim 1, **characterized in that** the course sensor means (150) is arranged to detect the course of the road at a distance of at least 50 m, preferably at least 150 m, particularly preferably at least 300 m, in front of the vehicle (100), and which is preferably arranged to receive oncoming traffic data by an oncoming traffic sensor means (151), which preferably comprises an optical sensor, in particular a camera (152), and/or a satellite-based navigation system and/or data of such a system which are provided by a navigation system of the vehicle, for example via a vehicle bus, such as a CAN bus, which is connected to the control system (130, 230). (170), which is connected to the control device (170) or is comprised by the control device (170), which describes the oncoming traffic on an adjacent lane to the vehicle (100) and the oncoming traffic data is used in determining the course of the road.

3. Method according to claim 1 or 2, **characterized in that** the control device (170) determines light distribution data (192) from the detected road course, which at least partially describe the detected road course.

4. Method according to one of the preceding claims, **characterized in that**, in the case of a straight course of the road course determined by the control device (170), and with increasing speed, the deflection width (182, 282, 382) of the deflection device (130, 230) is reduced.

5. Motor vehicle headlamp system (110) comprising at least one headlamp (102, 103, 202) arranged to produce a variable high beam light distribution, and at least one control device (170), **characterized in that** the motor vehicle headlamp system (110) comprises a course sensor means (150) and a speed sensor means (160), and the at least one control device (170) is configured to perform the method according to any one of the preceding claims.

6. Motor vehicle headlamp system (110) according to claim 5, **characterized in that** the illuminating means (120, 220) of the headlamp (102, 103, 202) comprises at least one light source (121, 122, 123, 221, 222, 223) in the form of an LED, preferably a narrow-band emitting LED or laser diode, the light emission of which is preferably focused or shaped by primary optics (225), and the motor vehicle headlamp system (110) preferably comprises conversion means (141, 241) which is located between the deflection device (130, 230) and the projection optics (140, 240) in the beam path of the light deflected by the deflection device (130, 230) in a focal plane of the projection optics (140, 240), or the conversion means is comprised by the illuminating means (120, 220), and the conversion means (141, 241) is arranged to convert the deflected light into, for example, white light.

7. Motor vehicle headlamp system (110) according to claim 5 or 6, **characterized in that** the deflecting device (130, 230) of the headlamp (102, 103, 202) in installed state is arranged to cause a horizontally oriented deflection of an incident light beam which is emitted by the illuminating means (120, 220) and directed towards the deflection device (130, 230), wherein the intensity of the illuminating means (120, 220) is reduced, preferably to zero, when an amount of a limit value (301, 302) for the deflection angle (184, 185) is exceeded.

8. Motor vehicle headlamp system (110) according to any one of claims 5 to 7, **characterized in that**, in the case of a curve in a certain road course detected by the control device (170), the deflection center (181, 281, 381) of the deflection device (130, 230) is configured in an installed state in a vehicle (100) adjacent, preferably horizontally adjacent, to the longitudinal axis (101) of the vehicle (100).

9. Motor vehicle headlamp system (110) according to any one of claims 5 to 8, **characterized in that** the luminous intensity (191) of the illuminating means (120, 220) of the headlamp (102, 103, 202) is controlled by pulse width modulation.

10. Motor vehicle headlamp system (110) according to any one of claims 5 to 9, **characterized in that** the deflection device (130, 230) comprises a controllable reflector in the form of a micro-electro-mechanical system.

11. Motor vehicle headlamp system (110) according to any one of claims 5 to 10, **characterized in that** the course sensor means (150) and/or the speed sensor means (160) comprises at least one optical sensor, preferably at least one camera (152).

12. Motor vehicle headlamp system (110) according to one of claims 5 to 11, **characterized in that** the course sensor means (150) and the speed sensor means (160) use at least one common sensor.

13. Motor vehicle headlight system (110) according to any one of claims 5 to 12, **characterized in that** the headlight (102, 103, 202) is an auxiliary high beam headlight.

14. Motor vehicle comprising a motor vehicle headlamp system (110) according to any one of claims 5 to 13.

## Revendications

1. Procédé de production d'une répartition variable de la lumière de feux de route par au moins un projecteur (102, 103, 202) d'un véhicule (100), qui comprend un moyen d'éclairage (120, 220), un dispositif de déviation (130, 230) et une optique de projection (140, 240), et le moyen d'éclairage (120, 220) est conçu pour émettre de la lumière en direction du dispositif de déviation (130, 230), qui dévie la lumière en direction de l'optique de projection (140, 240) pour la projeter devant le véhicule (100) et qui produit une image lumineuse devant le véhicule (100), le dispositif de déviation (130, 230) pouvant être configuré par un dispositif de commande (170) au moyen d'un jeu de paramètres de déviation (180), le procédé comprenant les étapes suivantes pour la production d'une fonction d'éclairage en virage d'une répartition de l'éclairage de route :
- Détection du tracé de la route par un moyen de détection de tracé (150) et de la vitesse du véhicule (100) par un moyen de détection de vitesse (160), qui sont compris dans le dispositif de commande (170) du véhicule (100),
- déterminer l'ensemble de paramètres de déviation (180) à partir du tracé de la route et de la vitesse du véhicule (100) par le dispositif de commande (170), comprenant un centre de déviation (181, 281, 381), une largeur de déviation (182, 282, 382) et une vitesse de déviation (183),
- la détermination par le dispositif de commande (170), à partir du tracé de la route et de la vitesse du véhicule (100), d'un ensemble de paramètres d'éclairage (190) destiné à commander le moyen d'éclairage (120, 220) et comprenant une intensité d'éclairage (191), ainsi qu'une distribution de lumière de route prédéfinie (300) sous la forme de données de distribution de lumière (192), **caractérisé en ce que** le procédé comprend l'étape suivante :
- Configurer le dispositif de déviation (130, 230) avec le jeu de paramètres de déviation (180) déterminé précédemment et une distribution de lumière de route (300) mémorisée dans le dispositif de commande (170) de telle sorte que la distribution de lumière de route (300) avec le jeu de paramètres de déviation (180) soit placée à l'intérieur d'une zone d'imagerie prédéterminée du dispositif de déviation (130, 230), et commande du moyen d'éclairage (120, 220) avec le jeu de paramètres d'éclairage (190) déterminé précédemment de telle sorte que l'intensité de la répartition de la lumière projetée à distance est modulée avec le jeu de paramètres d'éclairage (190), la vitesse de déviation (183) étant réglée en fonction d'un angle de déviation (184, 185) du dispositif de déviation (130, 230) et augmente de préférence à partir du centre de déviation (181, 281, 381) lorsque la valeur de l'angle de déviation (184, 185) augmente et de préférence lorsqu'une valeur limite est dépassée pour la valeur de l'angle de déviation (184, 185), la valeur limite correspondant à la valeur d'une valeur limite inférieure (301) ou à une valeur limite supérieure (302), redevient plus faible, de préférence nulle, et dans le cas d'un tracé rectiligne de la route déterminé par le dispositif de commande (170), ainsi qu'avec une vitesse croissante, la largeur de déviation (182, 282, 382) du dispositif de déviation (130, 230) est réduite.

2. Procédé selon la revendication 1, **caractérisé en ce que** le moyen de détection de tracé (150) est agencé pour détecter le tracé de la route à une distance d'au moins 50 m, de préférence d'au moins 150 m, de manière particulièrement préférée d'au moins 300 m devant le véhicule (100), et qui est de préférence agencé pour détecter des données de trafic en sens inverse par un moyen de détection de trafic en sens inverse (151), qui comprend de préférence un capteur optique, en particulier une caméra (152), et/ou un système de navigation assisté par satellite ou sur des données d'un tel système, qui sont fournies par un système de navigation du véhicule, par exemple par l'intermédiaire d'un bus de véhicule, comme un bus CAN.
connectées au dispositif de commande (170) ou comprises dans le dispositif de commande (170), qui décrivent le trafic venant en sens inverse du véhicule (100) sur une voie de circulation adjacente, et les données de trafic en sens inverse sont utilisées pour déterminer le tracé de la route.

3. Procédé selon la revendication 1 ou 2, **caractérisé en ce que** le dispositif de commande (170) détermine, à partir du tracé de route détecté, des données de distribution de lumière (192) qui décrivent au moins partiellement le tracé de route détecté.

4. Procédé selon l'une des revendications précédentes, **caractérisé en ce que**, dans le cas d'un tracé rectiligne de la route déterminé par le dispositif de commande (170), ainsi qu'avec une vitesse croissante, la largeur de déviation (182, 282, 382) du dispositif de déviation (130, 230) est réduite.

5. Système de projecteur de véhicule automobile (110) comprenant au moins un projecteur (102, 103, 202) agencé pour générer une répartition variable des feux de route, et au moins un dispositif de commande (170), **caractérisé en ce que** le système de projecteur de véhicule automobile (110) comprend un moyen de détection d'allure (150) et un moyen de détection de vitesse (160), et ledit au moins un dispositif de commande (170) est configuré pour mettre en œuvre le procédé selon l'une quelconque des revendications précédentes.

6. Système de projecteur de véhicule automobile (110) selon la revendication 5, **caractérisé en ce que** le moyen d'éclairage (120, 220) du projecteur (102, 103, 202) comprend au moins une source lumineuse (121, 122, 123, 221, 222, 223) sous la forme d'une LED, de préférence une LED à émission en bande étroite ou une diode laser, dont l'émission lumineuse est de préférence focalisée ou mise en forme par une optique primaire (225), et le système de projecteur de véhicule automobile (110) comprend de préférence un moyen de conversion (141, 241) qui est situé entre le dispositif de déviation (130, 230) et l'optique de projection (140, 240) dans le trajet de la lumière déviée par le dispositif de déviation (130, 230) dans un plan focal de l'optique de projection (140, 240), ou le moyen de conversion est compris par le moyen d'éclairage (120, 220), et le moyen de conversion (141, 241) est adapté pour convertir la lumière déviée en lumière blanche, par exemple.

7. Système de projecteur de véhicule automobile (110) selon la revendication 5 ou 6, **caractérisé en ce que** le dispositif de déviation (130, 230) du projecteur (102, 103, 202) est agencé, à l'état monté, pour réaliser une déviation orientée horizontalement d'un faisceau lumineux incident émis par le moyen lumineux (120, 220) et dirigé vers le dispositif de déviation (130, 230), l'intensité du moyen d'éclairage (120, 220) étant réduite, de préférence à zéro, lorsqu'une valeur d'une valeur limite (301, 302) pour l'angle de déviation (184, 185) est dépassée.

8. Système de projecteur de véhicule automobile (110) selon l'une des revendications 5 à 7, **caractérisé en ce que**, dans le cas d'un virage détecté par le dispositif de commande (170) dans un tracé routier donné, le centre de déviation (181, 281, 381) du dispositif de déviation (130, 230) est configuré à l'état monté dans un véhicule (100) à côté, de préférence horizontalement à côté de l'axe longitudinal (101) du véhicule (100).

9. Système de phare de véhicule automobile (110) selon l'une des revendications 5 à 8, **caractérisé en ce que** l'intensité lumineuse (191) du moyen d'éclairage (120, 220) du phare (102, 103, 202) est commandée par une modulation de largeur d'impulsion.

10. Système de projecteur de véhicule automobile (110) selon l'une quelconque des revendications 5 à 9, **caractérisé en ce que** le dispositif de déviation (130, 230) comprend un réflecteur commandable sous la forme d'un système micro-électro-mécanique.

11. Système de projecteur de véhicule automobile (110) selon l'une des revendications 5 à 10, **caractérisé en ce que** le moyen de détection d'allure (150) et/ou le moyen de détection de vitesse (160) comprend au moins un capteur optique, de préférence au moins une caméra.
caméra (152).

12. Système de projecteur de véhicule automobile (110) selon l'une des revendications 5 à 11, **caractérisé en ce que** le moyen de détection d'allure (150) et le moyen de détection de vitesse (160) utilisent au moins un capteur commun.

13. Système de projecteur de véhicule automobile (110) selon l'une des revendications 5 à 12, **caractérisé en ce que** le projecteur (102, 103, 202) est un projecteur de route additionnel.

14. Véhicule automobile comportant un système de projecteur de véhicule automobile (110) selon l'une des revendications 5 à 13.
